Europäisches Patentamt

European Patent Office

Office européen des brevets

(19)

(11) Veröffentlichungsnummer : **0 456 778 B1**

(12) # EUROPÄISCHE PATENTSCHRIFT

(45) Veröffentlichungstag der Patentschrift :
**17.03.93 Patentblatt 93/11**

(51) Int. Cl.$^5$: **F02D 41/14**

(21) Anmeldenummer : **90916461.8**

(22) Anmeldetag : **16.11.90**

(86) Internationale Anmeldenummer :
**PCT/DE90/00882**

(87) Internationale Veröffentlichungsnummer :
**WO 91/09220 27.06.91 Gazette 91/14**

(54) **SYSTEM ZUR REGELUNG EINES BETRIEBSPARAMETERS EINER BRENNKRAFTMASCHINE EINES KRAFTFAHRZEUGS.**

(30) Priorität : **12.12.89 DE 3941000**
**12.05.90 DE 4015293**

(43) Veröffentlichungstag der Anmeldung :
**21.11.91 Patentblatt 91/47**

(45) Bekanntmachung des Hinweises auf die Patenterteilung :
**17.03.93 Patentblatt 93/11**

(84) Benannte Vertragsstaaten :
**DE ES FR GB IT**

(56) Entgegenhaltungen :
**EP-A- 0 275 169**

(56) Entgegenhaltungen :
**DE-A- 3 107 666**
**JP-A-57 122 145**
**Patent Abstracts of Japan, Band 6, Nr. 146**
**(M-147) 5. August 1982, & JP, A, 57065824**
**(NISSAN MOTOR CO. LTD) 21. April 1982**
**Patent Abstracts of Japan, Band 13, Nr. 415**
**(M-870), 13. September 1989, & JP, A, 01151750**
**(NIPPON DENSO CO. LTD) 14. Juni 1989**

(73) Patentinhaber : **ROBERT BOSCH GMBH**
**Postfach 30 02 20**
**W-7000 Stuttgart 30 (DE)**

(72) Erfinder : **GRABS, Manfred**
**Mönsheimer Str. 36**
**W-7135 Iptingen (DE)**

EP 0 456 778 B1

## Beschreibung

### Stand der Technik

Die Erfindung betrifft ein System zur Regelung eines Betriebsparameters einer Brennkraftmaschine gemäß dem Oberbegriff des Patentanspruchs 1.

Ein derartiges System zur Regelung eines Betriebsparameters einer Brennkraftmaschine ist für die Leerlaufdrehzahlregelung von Brennkraftmaschinen aus der DE-A-30 39 435 bekannt. Dort wird vorgeschlagen, zur Regelung der Leerlaufdrehzahl ein auf diesen Betriebsparameter einwirkendes, elektrisch betätigbares Stellglied durch einen PID-Regler derart anzusteuern, daß die Leerlaufdrehzahl als der zu regelnde Betriebsparameter einen vorgegebenen Sollwert annimmt. Zur drehzahlabhängigen und temperaturabhängigen Begrenzung des Ansteuersignals des Stellgliedes ist ferner ein Begrenzungsregler vorgesehen, der im Sinne einer maximalen bzw. minimalen Begrenzung des Ansteuersignals auf den PID-Regler einwirkt.

Schwer regelbare Systeme, die beispielsweise bei Verwendung von Stellgliedern auftreten, die über den Stellbereich stark veränderliche Reibungskräfte und der Steuerbewegung entgegengesetzte Momente aufweisen, wobei zusätzlich Exemplarstreuungen und Temperaturdrifts eine Rolle spielen können, können durch einen PID-Regler hinsichtlich Regelgenauigkeit, Dynamik und/oder Stabilität nicht befriedigend geregelt werden.

Es ist daher Aufgabe der Erfindung, Maßnahmen anzugeben, die eine zufriedenstellende Regelung eines Betriebsparameters einer Brennkraftmaschine auch bei schwer regelbaren Systemen gewährleisten. Dies wird dadurch erreicht, daß bei Vorliegen vorbestimmter Bedingungen die Änderungsgeschwindigkeit des zu regelnden Betriebsparameters durch Eingriff in den Integrationsvorgang und/oder in den Proportionalverstärkungsvorgang auf einen vorgegebenen Wert geregelt wird.

Aus der DE-A-36 31 283 ist ein Stellorgan zur gesteuerten Zumessung von Verbrennungsluft zu einer Brennkraftmaschine bekannt, das mit einer Rückstellfeder ausgestattet ist, gegen die eine Gegenfeder zur Einstellung einer vorgegebenen Ruheposition einwirkt. Dieses Stellorgan setzt einer Verstellbewegung in den verschiedenen Bereichen seines Verstellweges unterschiedliche Kräfte bzw. Momente entgegen.

Die DE-C-27 51 125 beschreibt ein Regelsystem zur Lageregelung einer Drosselklappe einer Brennkraftmaschine in Abhängigkeit der Fahrpedalstellung, ein sogenanntes elektronisches Gaspedal. Zur Verbesserung der Abgaszusammensetzung wird das Ausgangssignal des Lagereglers in seiner Höhe begrenzt. Dies führt zu einer Begrenzung der Änderungsgeschwindigkeit der Drosselklappe und einer Verbesserung der Abgaszusammensetzung im Übergangsbereich bei einer schnellen Änderung der Fahrpedalposition.

Aus der Zusammenfassung der JP-A 57-122 145 ist eine Lambda-Regelung bekannt, bei der abhängig von Betriebsgröße wie dem Ansaugdruck in die Proportional- bzw. Integralregelung eingegriffen wird und so die Änderungsgeschwindigkeit des zu regelnden Parameters Lambda gesteuert wird.

### Vorteile der Erfindung

Die erfindungsgemäßen Maßnahmen gewährleisten eine zufriedenstellende Regelung schwer regelbarer Systeme. Die Steuerung der Änderungsgeschwindigkeit des zu regelnden Betriebsparameters auf einen vorgegebenen Wert unter vorbestimmten Bedingungen durch Eingreifen in den von der Regeleinheit ausgeführten Integrations- und/oder Proportionalverstärkungsvorgang ermöglicht es, den Integral- und/oder den Proportionalanteil des Reglers mit Blick auf eine ausreichende Dynamik des Regelsystems zu wählen. So erlauben die obengenannten Maßnahmen beispielsweise einen sehr großen Integrationsanteil. Die normalerweise auftretende Instabilität der Regelsysteme mit starkem Integralanteil wird durch Eingreifen in den Integrations- und/oder Proportionalverstärkungsvorgang im Sinne einer Reduzierung der Änderungsgeschwindigkeit des Istwert bei Erreichen einer vorgegebenen Schwelle durch die Änderungsgeschwindigkeit des zu regelnden Betriebsparameters unterdrückt.

Eine besonders vorteilhafte Realisierung des Eingriff in den Integrationsvorgang ist die Überlagerung des Integralanteils des Reglers mit einem durch Umkehrung der Integrationsrichtung bei Erreichen oder Überschreiten bzw. Unterschreiten des Schwellwertes gebildeten Zweipunktregler. Dadurch wird eine Steuerung der Änderungsgeschwindigkeit des zu regelnden Betriebsparameters der Brennkraftmaschine erreicht.

Der Eingriff in den Proportionalverstärkungsvorgang des Reglers erfolgt analog zum Eingriff in den Integrationsvorgang in vorteilhafter Weise durch Vorzeichenumkehr des Verstärkungsfaktors des P-Anteils des Reglers, was einer Überlagerung des P-Anteils mit einem Zweipunktregler gleichkommt.

Weitere Vorteile der Erfindung ergeben sich in Verbindung mit den Unteransprüchen auf der nachfolgenden Beschreibung eines Ausführungsbeispieles.

### Zeichnung

Die Erfindung wird nachstehend anhand der in der Zeichnung dargestellten Ausführungsformen erläutert. Dabei zeigt Figur 1 ein Übersichtsblockschaltbild eines Regelsystems zur Regelung der Stellung eines Leistungsstellgliedes einer Brennkraftmaschine, mit dessen Hilfe die Funktion der erfindungsgemäßen Vorgehensweise verdeutlicht wird. Figur 2 zeigt anhand eines Flußdiagrammes die Realisierung dieser Vorgehensweise in digitaler Ausführung. Figur 3 schließlich zeigt einen beispielhaften zeitlichen Verlauf des Ausgangssignals des Integralanteils.

Beschreibung von Ausführungsbeispielen

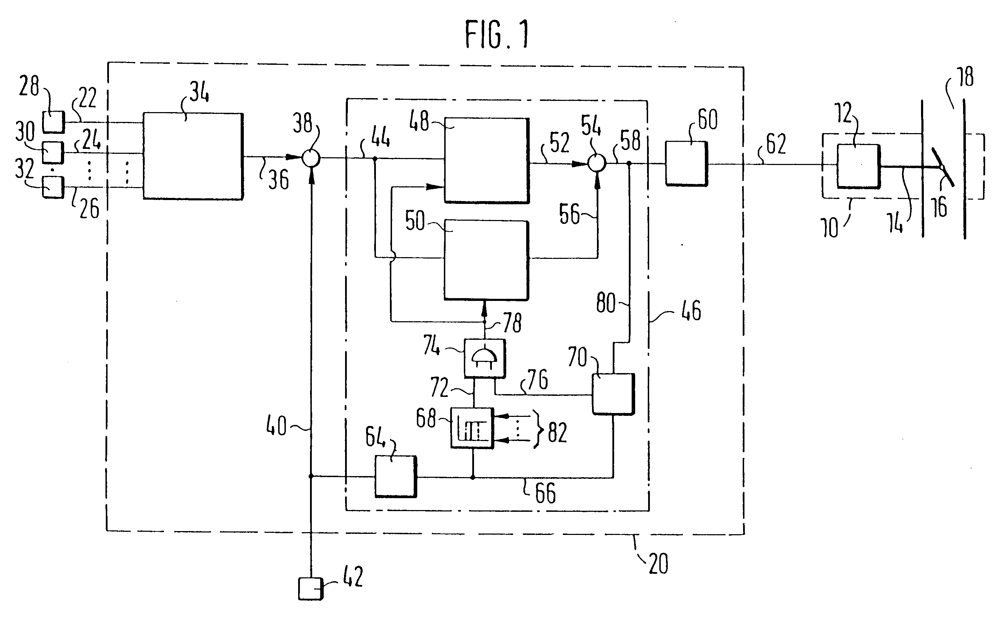

Figur 1 beschreibt ein Stellorgan 10 zur Einstellung eines Betriebsparameters einer nicht dargestellten Brennkraftmaschine. Dieses Stellorgan 10 umfaßt einen Stellmotor 12, der über eine starre Verbindung 14 mit einem Stellglied 16 zur Beeinflussung des Betriebsparameters der Brennkraftmaschine verbunden ist. Dieses Stellglied 16 ist im Ausführungsbeispiel der Figur 1 als Drosselklappe im Ansaugsystem 18 einer Brennkraftmaschine dargestellt. Der erfindungsgemäße Gedanke ist jedoch nicht auf diese Art von Stellglied beschränkt, dieses kann beispielsweise auch die Regelstange einer Dieselbrennkraftmaschine sein.

Ferner ist in Figur 1 ein Motorsteuerungssystem 20 dargestellt, das verschiedene Funktionen wie z.B. Kraftstoffzumessung, Zündzeitpunktsbestimmung, Abgasregelung, Leerlaufdrehzahlregelung und/oder elektronisches Gaspedal durchführen kann. Im Ausführungsbeispiel nach Figur 1 ist lediglich der zur Positionsregelung des Stellorgans 10 und zur Durchführung der erfindungsgemäßen Vorgehensweise benötigte Teil beschrieben. Die Eingangsleitungen 22, 24 bis 26 verbinden das Motorsteuerungssystem 20 mit Meßanordnungen 28, 30 bis 32, die der Sollwertbildungseinheit 34 allgemein bekannte Betriebsparameter der Brennkraftmaschine und des Kraftfahrzeugs zur Bildung des Regelsollwertes, wie beispielsweise Motortemperatur, Drehzahl, Gang- und/oder Kupplungsstellung, Batteriespannung, Fahrpedalstellung, usw. zuführen. Die Ausgangsleitung 36 der Sollwertbildungseinheit 34 wird in einer Vergleichsstelle 38 mit einer weiteren Eingangsleitung 40 des Motorsteuerungssystems 20 verknüpft. Die Eingangsleitung 40 ist mit einer Istwertmeßeinrichtung 42, die gemäß dem Ausführungsbeispiel die aktuelle Position des Stellorgans 10 mißt, verbunden.

Die Ausgangsleitung 44 der Vergleichsstelle 38 bildet eine Eingangsleitung einer strichpunktiert umrandeten Regeleinheit 46, die im wesentlichen aus einem mit der Eingangsleitung 44 verbundenen proportionalen Regleranteil 48 und einem ebenfalls mit der Eingangsleitung 44 verbundenen integralen Regleranteil 50 besteht. Eine Leitung 52 verbindet den proportionalen Regleranteil 48 mit einer Additionsstelle 54, die ferner über eine Leitung 56 mit dem integralen Regleranteil 50 verbunden ist. Das Additionsergebnis der Additionsstelle 54 wird auf einer Leitung 58, die die Additionsstelle 54 mit einer Treiberstufe 60 verknüpft und auf einer Verbindungsleitung 62, die die Treiberstufe 60 und damit das Motorsteuerungssystem 20 mit dem Stellorgan 10 bzw. dem Stellmotor 12 verbindet, zur Steuerung der Position des Stellgliedes 16 bzw. Stellorgans 10 weitergeleitet.

Die Reglereinheit 46 besteht darüber hinaus aus einem differenzierenden Element 64, das mit der Eingangsleitung 40 des Motorsteuerungssystems 20 verbunden und andererseits über eine Leitung 66 mit einer Schwellwertstufe 68 und einer Einheit 70 verknüpft ist. Ferner ist die Einheit 70 über eine Leitung 80 mit der Leitung 58 verbunden. Die Schwellwertstufe 68 verfügt über weitere Eingänge 82, die weiter unten näher ausgeführte Meßwerte zur Beeinflussung des Schwellwertes von entsprechenden, in Figur 1 nicht dargestellten Meßeinrichtungen zuführen. Die Ausgangsleitung 72 der Schwellwertstufe 68 bildet einen Eingang eines logischen Und-Elements 74, dessen zweiter Eingang die Verbindungsleitung 76 bildet, die das logische Und-Element 74 mit der Einheit 70 verbindet. Die Ausgangsleitung 78 des logischen Und-Elements 74 ist auf den integralen Regleranteil 50 zur Bestimmung des Integrationsvorgangs, und/oder auf den proportionalen Regleranteil 48 zur Bestimmung des Proportionalverstärkungsvorgangs geführt.

In Abhängigkeit der über die Leitungen 22, 24 bis 26 zugeführten Betriebsparameter bildet die Sollwertbildungseinheit 34 einen Sollwert für die Position des Stellorgans 10. Dient die Anordnung nach Figur 1 zur Regelung der Leerlaufdrehzahl über die Position des Stellorgans 10, so bestimmt die Sollwertbildungseinheit 34 den Sollwert als Funktion der Betriebsparameter Drehzahl, Motortemperatur, Batteriespannung, Gangstellung und/oder Kupplungsstellung, etc.; bei einem elektronischen Gaspedal, das die Leistung der Brennkraftmaschine über die Stellung des Stellorgans 10 steuert, bestimmt die Sollwertbildungseinheit 34 den Lagesollwert insbesondere aus der Stellung des Fahrpedals. Der Sollwert wird über die Leitung 36 an die Vergleichsstelle 38 abgegeben, wo aus dem berechneten Sollwert und dem von der Istwert-Meßeinrichtung 42 gemessenen und über die Leitung 40 der Vergleichsstelle 38 zugeführten Stellungsistwert des Stellorgans 10 ein der Abweichung zwischen den beiden Werten repräsentierendes Signal über die Leitung 44 an die Reglereinheit 46 abgegeben wird. In Abhängigkeit dieses Abweichungssignals bildet der proportionale und der integrale Regleranteil 48, 50 entsprechende Ausgangssignale die in der Additionsstelle 54 zum Reglerausgangssignal zusammengeführt werden, das über die Treiberstufe 60 und die Ausgangsleitung 62 des Motorsteuerungssystem 20 die Stellung des Stellorgans im Sinne einer Verringerung der Abweichung betätigt.

Die erfindungsgemäß vorgeschlagene Regelung der Änderungsgeschwindigkeit des zu regelnden Betriebsparameters, im Falle des Ausführungsbeispiels nach Figur 1 der Stellung des Stellorgans 10, wird dadurch bewerkstelligt, daß das differenzierende Element 64 die Änderungsgeschwindigkeit des auf der Eingangsleitung 40 anliegenden Stellungs- bzw. Istwertsignals bestimmt. Dieser Wert wird einerseits über die Leitung 66 an die Schwellwertstufe 68 und andererseits an die Einheit 70 abgegeben. Die Schwellwertstufe 68 gibt in Abhängigkeit der auf ihren Eingangsleitungen 82 anliegenden Parameter, beispielsweise Motortemperatur, Stellorgantemperatur und/oder Regelabweichung, einen Schwellwert vor. Die Einheit 70 ist ferner mit dem Reglerausgangssignal auf der Leitung 58 oder 62 verbunden und bestimmt die Vorzeichen der Änderung von Reglerausgangssignal und Änderungsgeschwindigkeitssignal des Istwerts. Sind beide Vorzeichen gleich, so gibt sie auf Leitung 76 ein entsprechendes Signal an das Und-Element 74 ab. Überschreitet bzw. erreicht nun das differenzierte Istwertsignal den von der Schwellwertstufe 68 vorgegebene Schwellwert, so wird ein entsprechendes Signal über die Leitung 72 an das Und-Element 74 abgegeben. Die Ausgangsleitung des Und-Elements 74 führt dann ein Signal, welches in den Integrationsvorgang des integralen Regleranteil 50, insbesondere zur Änderung der Integrationsrichtung des integralen Regleranteils 50, bzw. in den Proportionalverstärkungsvorgang des proportionalen Regleranteils 48, insbesondere zur Änderung des Vorzeichens des proportionalen Verstärkungsfaktors, eingreift, wenn sowohl das differenzierte Istwertsignal den Schwellwert der Schwellwertstufe 68 erreicht bzw. überschritten hat, als auch die Vorzeichen von differenzierten Istwertsignal und Reglerausgangssignal gleich sind.

Eine beispielsweise durch eine Sollwertänderung, im Falle der Leerlaufdrehzahlregelung z. B. durch Zuschalten einer zusätzlichen Last, auftretende große Abweichung zwischen Soll- und Istwert führt bei starkem Integralanteil des Reglers zu einer entsprechend schnellen Änderung im Reglerausgangssignal, die zu einer ebensolchen im Istwertsignal führt. Überschreitet die Änderungsgeschwindigkeit des Istwertsignals den vorgegebenen Schwellwert, so daß Regelschwingungen und Instabilitäten auftreten können, so wird, ausgelöst von der Überschreitung des von der Schwellwertstufe 68 vorgegebenen Schwellwerts, die Integrationsrichtung des integralen Regleranteils 50 umgekehrt, beispielsweise durch Vorzeichenumkehr seines Eingangssignals. Dadurch ergibt sich ein der Änderung entgegenwirkendes Ausgangssignal des integralen Regleranteils 50, was zu einer Reduzierung der Änderungsgeschwindigkeit im Istwertsignal führt. Wird der von der Schwellwertstufe 68 vorgegebene Schwellwert unterschritten, ändert sich die Integrationsrichtung des integralen Regleranteils 50 erneut in seine ursprüngliche Richtung, wodurch sich eine Erhöhung der Änderungsgeschwindigkeit unter der Voraussetzung einer nach wie vor vorhandenen Abweichung zwischen Soll- und Istwert ergibt. Auf diese Weise wird durch Umkehrung der Integrationsrichtung des integralen Regleranteils 50 ein diesen integralen Anteil überlagerter Zweipunktregler realisiert, der die Änderungsgeschwindigkeit des Istwertes auf einen vorbestimmten Wert steuert. Dieser vorbestimmte Wert wird von der Schwellwertstufe 68 bestimmt. Durch diese Maßnahme wird die zur Regelung notwendige Dynamik als auch die notwendige Stabilität für die eingangs beschriebenen schwer regelbaren Systeme ereicht.

Die Wirkungsweise des Eingriffs in den Proportionalverstärkungsvorgang ergibt sich in analoger Weise aus der obigen Beschreibung des Eingriffes in den Integrationsvorgang.

Die zusätzliche, nicht zwingend notwendige, Bedingung, das die Äderung bzw. das Vorzeichen von Istwertsignal und Reglerausgangssignal gleich sein müssen, dient zur vorteilhaften Verbesserung des Verhaltens im Übergangsbereich. Zeigt Reglerausgangssignal und Istwertsignal fallende Tendenz, so wird bei durch eine Erhöhung des Sollwert vorgegebene Änderung im Abweichungssignal zwischen Soll- und Istwert, die zu einer Erhöhung des Reglerausgangssignals führt, ein Ansprechen der Einrichtung in diesem Übergangsfall verhindert.

Der erfindungsgemäße Gedanke ist nicht nur auf eine Lageregelung eines Stellgliedes beschränkt, sondern kann bei allen Regelsystemen der Brennkraftmaschine, insbesondere einer Drehzahlregelung, angewendet werden, die die eingangs beschriebenen Nachteile eines'schwer regelbaren Systems besitzen. Die Zuordnung der einzelnen Bauteile zu den verschiedenen Baugruppen Motorsteuerungssystem und Reglereinheit dient dabei lediglich zur Übersichtlichkeit. Ferner kann es sich bei dem Regler auch um einen PID-Regler oder einen Regler mit proportionalen, integralen und/oder differentiellen Anteilen handeln.

Neben der oben beschriebenen Umkehr der Integrationsrichtung kann die Steuerung der Änderungsgeschwindigkeit durch Eingriffe in den Integrationsvorgang wie z.B. Anhalten der Integration bei überschrittener Schwelle, Änderung der Integrationssteigung oder Umkehr der Integrationsrichtung bzw. Änderung der Steigung nach einer vorgegebener Verzögerungszeit vorgenommen werden. Die Umkehr der Integrationsrichtung hat sich in einem konkreten Fall am geeignetsten erwiesen.

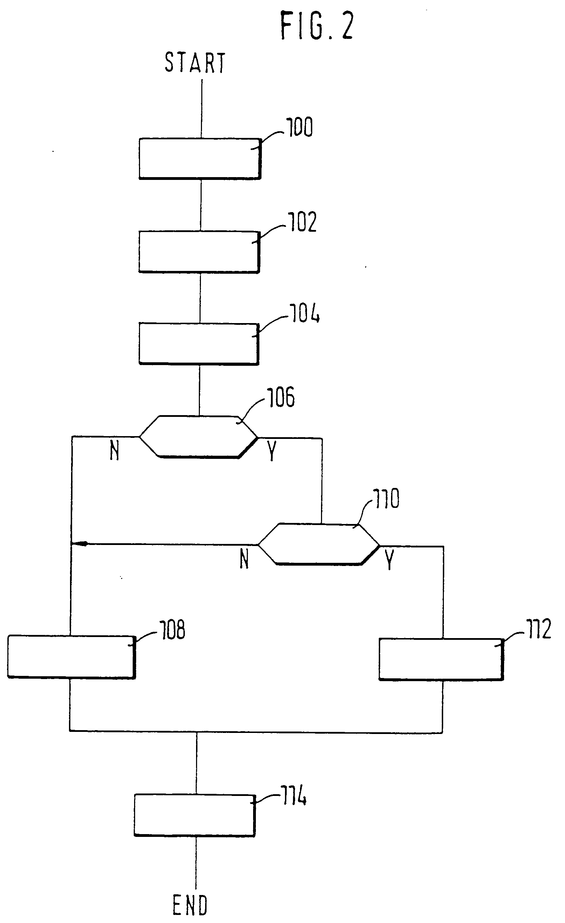

Eine digitale Ausführungsform des erfindungsgemäßen Gedankens wird in Figur 2 vorgestellt. Nach Start des Programmteils wird im Schritt 100 durch Vergleich von Soll- und Istwert die Abweichung zwischen Soll- und Istwert festgestellt. Ferner wird in Schritt 100 die Änderungsgeschwindigkeit des Istwertsignals beispielsweise durch Differenzierung berechnet. In Schritt 102 wird in Abhängigkeit der Abweichung zwischen Soll- und Istwert das Ausgangssignal des proportionalen Regleranteils berechnet.

Die Berechnung des Ausgangssignals des proportionalen Regleranteils 48 erfolgt vorzugsweise als Funktion der Regelabweichung. Dabei wird der Verstärkungsfaktor des proportionalen Regleranteils derart bestimmt, daß die Ausregelung der Abweichung mit großer Dynamik unter Vermeidung von Überschwingen im gesamten Wertebereich der Abweichung stattfindet. Zu diesem Zweck wird ein Wert für die systembedingte, minimale Regelabweichung vorgegeben und die Differenz zwischen diesem minimalen und dem tatsächlichen Wert der Regelabweichung gebildet. Diese Differenz ist proportional zum Verstärkungsfaktor des proportionalen Anteils des Reglers.

Unterschreitet der auf diese Weise gebildete Verstärkungsfaktor einen vorgegebenen Wert, so wird der Verstärkungsfaktor auf diesen vorgegebenen Wert festgelegt, anderenfalls stellt er eine Funktion der Regelabweichung dar. Das Ausgangssignal des proportionalen Anteils wird dann aus Regelabweichung und Verstärkungsfaktor ermittelt.

Die Abhängigkeit des Proportionalanteils von der Regelabweichung in vorgegebenen Betriebsbereichen läßt sich durch die folgenden Gleichungen veranschaulichen:

$$P = P_0 * (MAX - DELTA) * K \text{ wenn } P > P_0$$
$$P = P_0 \text{ wenn } P < P_0$$

($P$ Proportionalverstärkungsfaktor, $P_0$ vorgegebener Festwert des Proportionalverstärkungsfaktors, MAX systembedingter Maximalwert der Regelabweichung, DELTA Regelabweichung mit Wertebereich 0 - MAX, K Konstante).

Dadurch ergibt sich eine charakteristische Abhängigkeit des P-Verstärkungsfaktors von der Regelabweichung, die in einem P-DELTA-Diagramm im wesentlichen durch eine Gerade negativer Steigung für $P > P_0$ und durch eine waagrechte Gerade $P = P_0$ für $P < P_0$ dargestellt werden kann.

Das daraus resultierende Ausgangssignal des Proportionalanteils des Reglers, welches aus einer Multiplikation des gemäß obiger Gleichung berechnetem Proportionalfaktors mit dem Wert der Regelabweichung gebildet wird, zeigt dabei das im folgenden skizzierte Verhalten in Abhängigkeit der Regelabweichung. Ausgehend vom Wert 0, der bei einer Regelabweichung 0 eingenommen wird, ergibt sich eine Abhängigkeit des Ausgangssignals von der Regelabweichung, die im wesentlichen mit der Regelabweichung steigend und, je nach Wahl von K und $P_0$, nach Überschreiten eines Maximalwertes fallend sich einem Festwert für die minimale Regelabweichung nähert, der von der Wahl des Wert $P_0$ abhängig ist.

Dadurch wird mit Blick auf die Dynamik und Stabilität des Regelkreises eine verbesserte Regelung erreicht, da bei geringer Regelabweichung die Verstärkung kleiner als bei größerer Abweichung ist. Darüber hinaus läßt sich der Verstärkungsfaktor durch Wahl der Parameter an den jeweiligen Regelkreis anpassen.

Schritt 104 bestimmt anhand einer dem Fachmann bekannten digitalen integralen Reglergleichung den im aktuellen Programmdurchlauf in Abhängigkeit der Abweichung zwischen Soll- und Istwert dem integralen Ausgangswert des Reglers aufzuaddierenden Steigerungswert $I_n$. Ist die Abweichung zwischen Soll- und Istwert negativ, so ist der in 104 berechnete Wert ebenfalls negativ. Im Abfrageschritt 106 wird überprüft, ob die Änderungsgeschwindigkeit des Istwertes den vorgegebenen Wert erreicht, bzw. überschritten hat. Ist dies nicht der Fall, so wird in Schritt 108 das in Schritt 102 bestimmte proportionale Ausgangssignal ausgelesen, das integrale Ausgangssignal des Reglers als Summe des Integratorausgangswerts des vorhergehenden Programmdurchlaufs und dem in diesem Programmdurchlauf bestimmten Steigerungswert festgelegt und ebenfalls ausgelesen, in Schritt 114 wird dann entsprechend des im Schritt 108 ermittelte Integratorausgangswert als Summenwert für den nächsten Programmdurchlauf festgelegt und der Programmteil erneut ausgeführt.

Wird in Schritt 106 festgestellt, daß die Änderungsgeschwindigkeit des Istwertes den vorgegebenen Schwellwert überschritten bzw. erreicht hat, so wird im Abfrageschritt 110 die Vorzeichen bzw. Änderungsrichtung von Istwertsignal und Reglerausgangssignal auf Gleichheit überprüft. Sind beide Vorzeichen nicht gleich, so wird mit Schritt 108 fortgefahren, in Schritt 114 wird dann entsprechend der im Schritt 108 ermittelte Integratorausgangswert als Summenwert für den nächsten Programmdurchlauf festgelegt und der Programmteil beendet.

Wird jedoch festgestellt, daß die Vorzeichen von Reglerausgangssignal und Istwertsignal gleich sind, so wird im Schritt 112 das im Schritt 102 bestimmte proportionale Ausgangssignal beispielsweise unter Umkehrung des Vorzeichens des Verstärkungsfaktors berechnet und ausgelesen, während das Ausgangssignal des integralen Regleranteils aus der Subtraktion des Summenwerts der vorhergehenden Programmdurchläufe und des in diesem Programmdurchlauf in Schritt 104 berechneten Steigerungswertes ermittelt wird. Die Subtraktion des Steigerungswertes von dem Summenwert führt zu einer Änderung der Integrationsrichtung des digitalen Reglers. In Schritt 114 wird dann entsprechend der im Schritt 112 ermittelte Integratorausgangswert als Summenwert für den nächsten Programmdurchlauf festgelegt.

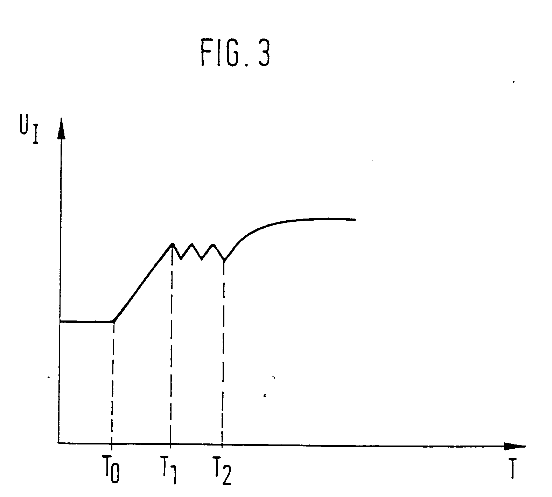

In Figur 3 ist beispielhaft der zeitliche Verlauf des integralen Ausgangssignals über der Zeit beschrieben. Zur Zeit T0 beginnt der Regelungsvorgang zu laufen. Besteht zwischen Soll- und Istwert keine Abweichung, startet das integrale Ausgangssignal von einem konstanten Wert ausgehend. Bei Auftreten einer Soll-Ist-Abweichung nimmt das Integratorausgangssignal in Abhängigkeit der Abweichung einer vorgegebenen Funktion folgend zu, die in Figur 3 der Einfachheit halber linear dargestellt ist. Zum Zeitpunkt $T_1$ wird ein Überschreiten der Änderungsgeschwindigkeitschwelle des Istwertes festgestellt und entsprechend Figur 2 die Integrationsrichtung durch Subtraktion der Steigerungswerte umgekehrt, so daß der Integratorausgangswert einer vorgegebenen Funktion folgend abnimmt. Ein Unterschreiten der vorgegebenen Schwelle der Änderungsgeschwindigkeit des Istwertes führt zu einer erneuten Umkehr der Integrationsrichtung, so daß der Integratorausgang erneut zunimmt. Dabei kann in vorteilhafter Ausgestaltung des erfindungsgemäßen Gedankens der Schwellwert als Hysterese ausgebildet sein. Dieser zickzackförmige Verlauf in der Art eines Zweipunktreglers (in weiterer Ausgestaltung mit Hysterese) steuert die Änderungsgeschwindigkeit des Istwertes auf einen vorgegebenen Wert.

Zum Zeitpunkt $T_2$ sei die Regelungsbedingungen derart, daß der vorgegebene Schwellwert der Änderungsgeschwindigkeit nicht mehr erreicht wird. Dies ist zum Beispiel dann der Fall, wenn die Regelabweichung zwischen Soll- und Istwert einen kleinen oder den Wert Null angenommen hat, oder wenn sich beispielweise durch Abschalten einer Zusatzlast die Polarität der Regelabweichung umgekehrt hat. In Figur 3 wird ersteres dargestellt. Das Intergratorausgangssignal nimmt entsprechend der normalen Regelfunktion einer vorgegebenen, im Idealfall exponentiellen Funktion folgend zu und nähert sich dem stationären Wert bei Regelabweichung Null. Bei digitalen Systemen ist der Signalverlauf stufenförmig.

Eine weitere Ausführungsform des erfindungsgemäßen Gedankens ergibt sich aus einer Überlagerung des integralen Anteils und/oder des proportionalen Anteils des Reglers mit einem Zweipunktregler. Dieser Regler, der mit oder ohne Hysterese ausgestattet sein kann, wird bei Erreichen bzw. Überschreiten der Schwelle aktiviert, wobei der Integrationsvorgang dann gestoppt wird. Bei Unterschreiten eines unteren Schwellwert der Änderungsgeschwindigkeit wird die Funktion des Integralanteils wiederaufgenommen und der Zweipunktregler abgeschaltet.

Ferner wird in vorteilhafter Weise die erfindungsgemäße Vorgehensweise nicht nur bei positiven Regelabweichungen und ansteigender Regelfunktion, sondern auch bei negativer Regelabweichung und fallender Regelfunktion angewendet.

Bei Umkehr der Integrationsrichtung ist es in vorteilhafter Ausgestaltung des erfindungsgemäßen Gedankens möglich für jede Richtung unterschiedliche Integrationszeitkonstanten zu verwenden. Erfolgt die Umkehrung der Integrationsrichtung im Sinne einer Verminderung der Änderungsgeschwindigkeit des Istwerts, so kann es von Vorteil sein, die Integration in dieser Richtung zur schnelleren Reaktion des Systems mit einer größeren Integrationskonstante als in der anderen Richtung vorzunehmen.

Eine analoge Einflußnahme auf einen gegebenenfalls vorhandenen D-Anteil kann ebenfalls vorgesehen sein.

## Patentansprüche

1. System zur Regelung eines Betriebsparameters einer Brennkraftmaschine eines Kraftfahrzeugs, mit einem elektrisch betätigbaren Stellglied, welches auf den zu regelnden Betriebsparameter mittelbar oder unmittelbar einwirkt und welches durch eine Regeleinheit mit wenigstens integralem und/oder proportionalem Anteil derart eingestellt wird, daß der zu regelnde Betriebsparameter einen vorgegebenen Wert annimmt,
dadurch gekennzeichnet, daß
bei Vorliegen vorbestimmter Bedingungen die Änderunggeschwindigkeit des zu regelnden Betriebsparameters auf einen vorgegebenen Wert durch Eingriff in den von der Regeleinheit ausgeführten Integrations- und/oder Proportionalverstärkungsvorgang geregelt wird.

2. System nach Anspruch 1, dadurch gekennzeichnet, daß bei Vorliegen vorbestimmter Bedingungen die Änderungsgeschwindigkeit des zu regelnden Betriebsparameters auf einen vorgegebenen Wert durch Eingriff in den von der Regeleinheit ausgeführten Integrationsvorgang geregelt wird.

3. Regelsystem nach Anspruch 1 oder 2, dadurch gekennzeichnet, daß die Änderungsgeschwindigkeit des zu regelnden Parameters bei Erreichen oder Überscheiten eines vorgegebenen Schwellwerts durch Eingriff des von der Regeleinheit ausgeführten Integrationsvorgangs und-/oder Proportionalverstärkungsvorgang auf den vorgegebenen Schwellwert geregelt wird.

4. Regelsystem nach einem der vorhergehenden Ansprüche, dadurch gekennzeichnet, daß der Eingriff in den Integrationsvorgang und/oder Proportionalverstärkungsvorgang bei Erreichen bzw. Überschreiten des Schwellwertes im Sinne einer Verminderung, bei Unterschreiten des Schwellwertes im Sinne einer Erhöhung der Änderungsgeschwindigkeit des Istwerts erfolgt.

5. Regelsystem nach einem der vorhergehenden Ansprüche, dadurch gekennzeichnet, daß die Regelung der Änderungsgeschwindigkeit des zu regelnden Parameters dann erfolgt, wenn zusätzlich die Änderung des zu regelnden Parameters und die Änderung des Stellgliedansteuersignals in ihrer Richtung übereinstimmen.

6. Regelsystem nach einem der vorhergehenden Ansprüche, dadurch gekennzeichnet, daß der vorgegebene Schwellwert in Abhängigkeit von Motortemperatur, Stellgliedtemperatur und/oder Regelabweichung veränderbar ausgestaltet ist.

7. Regelsystem nach einem der vorhergehenden Ansprüche, dadurch gekennzeichnet, daß bei Vorliegen der vorbestimmten Bedingungen die Regelung der Änderungsgeschwindigkeit des zu regelnden Parameters durch Beeinflussung des integralen und/oder proportionalen Anteils im Sinne eines Zweipunktreglers erfolgt.

8. Regelsystem nach einem der vorhergehenden Ansprüchen, dadurch gekennzeichnet, daß dem integralen und/oder proportionalen Anteil des Reglers ein Zweipunktregler mit oder ohne Hysterese überlagert ist, der bei Vorliegen bestimmter Bedingungen unter Anhalten des Integrationsvorgangs aktivierbar ist.

9. Regelsystem nach einem der vorhergehenden Ansprüche, dadurch gekennzeichnet, daß bei Erreichen des vorgegebenen Schwellwerts die Integrationsrichtung des integralen Anteils der Regeleinheit umgekehrt wird und bei Unterschreiten des Schwellwerts erneut umgekehrt wird.

10. Regelsystem nach einem der vorhergehenden Ansprüche, dadurch gekennzeichnet, daß der vorgegebene Schwellwert mit einer Hysterese ausgebildet ist.

11. Regelsystem nach einem der vorhergehenden Ansprüche, dadurch gekennzeichnet, daß der Eingriff durch Anhalten des Integrationsvorgangs, durch Änderung der Integrationssteigung oder durch verzögerte Umkehr der Integrationsrichtung und/oder Änderung der Steigung erfolgt.

12. Regelsystem nach einem der vorhergehenden Ansprüche, dadurch gekennzeichnet, daß der Eingriff in den Proportionalverstärkungsvorgang des Reglers durch Umkehrung des Vorzeichens des Verstärkungsfaktors vorgenommen wird.

13. Regelsystem nach einem der vorhergehenden Ansprüche, dadurch gekennzeichnet, daß der P-Verstärkungsfaktor auf vorgegebene Weise von der Regelabweichung abhängig gewählt wird.

**Claims**

1. System for controlling an operating parameter of an internal combustion engine of a motor vehicle, having an actuation element which can be activated electrically, which acts indirectly or directly on the operating parameter to be controlled and which is set by means of a control unit with at least integral and/or proportional portion in such a way that the operating parameter to be controlled assumes a predetermined value, characterised in that in the presence of predetermined conditions the speed of change of the operating parameter to be controlled is controlled to a predetermined value by intervention in the integration and/or proportional amplification process executed by the control unit.

2. System according to Claim 1, characterised in that in the presence of predetermined conditions the speed of change of the operating parameter to be controlled is controlled to a predetermined value by intervention in the integration process executed by the control unit.

3. Control system according to Claim 1 or 2, characterised in that the speed of change of the parameter to be controlled is controlled to the predetermined threshold value when a predetermined threshold value is reached or exceeded by intervention of the integration process and/or proportional amplification process executed by the control unit.

4. Control system according to one of the preceding claims, characterised in that the intervention in the integration process and/or proportional amplification process tales place with the effect of a reduction in the speed of-change of the actual value when the threshold value is reached or exceeded and with the effect of an increase in the speed of change of the actual value when the threshold value is undershot.

5. Control system according to one of the preceding claims, characterised in that the control of the speed of change of the parameter to be controlled tales place whenever there is an additional correspondence in the direction of the change of the parameter to be controlled and the direction of the change of the actuation element actuation signal.

6. Control system according to one of the preceding claims, characterised in that the predetermined threshold value is designed so as to be variable as a function of engine temperature, actuation element temperature and/or control deviation.

7. Control system according to one of the preceding claims, characterised in that, in the presence of the predetermined conditions, the control of the speed of change of the parameter to be controlled tales place by influencing the integral and/or proportional portion with the effect of a two-point controller.

8. Control system according to one of the preceding claims, characterised in that the integral and/or proportional portion of the controller has superimposed on it a two-point controller with or without hysteresis, which controller can be activated in the presence of specific conditions while the integration process is stopped.

9. Control system according to one of the preceding claims, characterised in that when the predetermined threshold value is reached the integration direction of the integral portion of the control unit is reversed and when the threshold value is undershot it is reversed again.

10. Control system according to one of the preceding claims, characterised in that the predetermined threshold value is formed with a hysteresis.

11. Control system according to one of the preceding claims, characterised in that the intervention takes place by stopping the integration process, by changing the integration gradient or by delayed reversal of the integration direction and/or change in the gradient.

12. Control system according to one of the preceding claims, characterised in that the intervention in the proportional amplification process of the controller is performed by reversing the sign of the amplification factor.

13. Control system according to one of the preceding claims, characterised in that the P-amplification factor is selected in a predetermined manner as a function of the control deviation.

**Revendications**

1. Système de régulation d'un paramètre de fonctionnement d'un moteur thermique d'un véhicule automobile comportant un organe de réglage commandé électriquement, qui agit directement ou indirectement sur les paramètres de fonctionnement à réguler et qui est réglé par une unité de régulation ayant au moins une partie intégrale et/ou proportionnelle, et en ce que le paramètre de fonctionnement à réguler prend une valeur prédéterminée, système caractérisé en ce que : en présence de conditions prédéterminées, on règle la vitesse de variation du paramètre de fonctionnement à régler sur une valeur prédéterminée en agissant sur l'opération d'intégration et/ou d'amplification proportionnelle exécutée par l'unité de régulation.

2. Système selon la revendication 1, caractérisé en ce qu'en présence de conditions de fonctionnement prédéterminées, on régule la vitesse de variation du paramètre de fonctionnement à réguler sur une valeur prédéterminée en agissant sur l'opération d'intégration exécutée par l'unité de régulation.

3. Système de régulation selon la revendication 1 ou 2, caractérisé en ce qu'on régule la vitesse de variation du paramètre à réguler sur une valeur de seuil prédéterminée lorsqu'on atteint ou dépasse un seuil prédéterminé par action de l'opération d'intégration exécutée par l'unité de régulation et/ou l'opération d'amplification proportionnelle.

4. Système de régulation selon l'une des revendications précédentes, caractérisé en ce qu'on agit sur l'opération d'intégration et/ou l'opération d'amplification proportionnelle lorsqu'on atteint ou dépasse le seuil dans le sens d'une réduction et lorsque le seuil est dépassé vers le bas, on agit dans le sens d'une augmentation de la vitesse de variation de la valeur réelle.

5. Système de régulation selon l'une des revendications précédentes, caractérisé en ce que la régulation de la vitesse de variation du paramètre à réguler se produit si en plus, la direction de la variation du paramètre à réguler et celle de la variation du signal de commande l'organe de réglage se correspondent.

6. Système de régulation selon l'une des revendications précédentes, caractérisé en ce que le seuil prédéterminé est variable en fonction de la température du moteur, de la température de l'organe de réglage et/ou de la déviation de régulation.

7. Système de régulation selon l'une des revendications précédentes, caractérisé en ce qu'en présence de conditions prédéterminées, la régulation de la vitesse de variation du paramètre à réguler se fait en agissant sur la partie intégrale et/ou proportionnelle dans le sens d'un moyen de régulation à deux points.

8. Système de régulation selon l'une des revendications précédentes, caractérisé en ce qu'à la partie intégrale et/ou proportionnelle du régulateur est combiné un régulateur en deux points avec ou sans hystérésis et qui en présence de certaines conditions peut être activé par arrêt de l'opération d'intégration.

**9.** Système de régulation selon l'une des revendications précédentes, caractérisé en ce que lorsqu'est atteint un seuil prédéterminé, la direction d'intégration de la partie intégrale de l'unité de régulation s'inverse et lors du dépassement vers le bas du seuil, la direction s'inverse de nouveau.

**10.** Système de régulation selon l'une des revendications précédentes, caractérisé en ce que le seuil prédéterminé présente de l'hystérésis.

**11.** Système de régulation selon l'une des revendications précédentes, caractérisé en ce que l'action se fait en arrêtant l'opération d'intégration, par modification de la pente d'intégration et/ou par inversion temporisée du sens d'intégration et/ou variation de la pente.

**12.** Système de régulation selon l'une des revendications précédentes, caractérisé en ce que l'action sur l'opération d'amplification proportionnelle du régulateur se fait par inversion du signe algébrique du coefficient d'amplification.

**13.** Système de régulation selon l'une des revendications précédentes, caractérisé en ce qu'on choisit le coefficient d'amplification proportionnelle d'une manière prédéterminée en fonction de la déviation de régulation.

FIG. 1

# FIG. 2

## FIG.3